# EUROPEAN PATENT SPECIFICATION

(11) **EP 2 554 967 B1**
(45) Date of publication and mention of the grant of the patent: **06.06.2018**
(21) Application number: 10848903.0
(22) Date of filing: 30.03.2010
(51) Int. Cl.: G01L 19/14, B23K 20/00, F16L 13/02, G01L 9/00, H01H 35/34

(54) **PRESSURE-SENSITIVE DEVICE AND METHOD OF WELDING JOINT OF PRESSURE-SENSITIVE DEVICE**
DRUCKEMPFINDLICHE VORRICHTUNG UND VERFAHREN ZUM SCHWEISSEN DER VERBINDUNG EINER DRUCKEMPFINDLICHEN VORRICHTUNG
DISPOSITIF SENSIBLE À LA PRESSION ET PROCÉDÉ D'ASSEMBLAGE PAR SOUDAGE D'UN DISPOSITIF SENSIBLE À LA PRESSION

(43) Date of publication of application: 06.02.2013
(73) Proprietor: Kabushiki Kaisha Saginomiya Seisakusho, Tokyo 165-0033 (JP)
(72) Inventor: KANAZAKI Fumio, Sayama-shi Saitama 350-1327 (JP); HONDOH Masahide, Sayama-shi Saitama 350-1327 (JP)
(74) Representative: Grünecker Patent- und Rechtsanwälte PartG mbB
(86) International application number: PCT/JP2010/055685
(87) International publication number: WO 2011/121724

(56) References cited:
- EP-A1- 2 511 684
- EP-A1- 2 530 445
- JP-A- 2 256 158
- JP-A- 2001 071 150
- JP-A- 2002 310 320
- JP-A- 2004 012 140
- JP-A- 2004 012 140
- JP-A- 2005 308 397
- JP-A- 2007 136 525

## Description

### [Technical Field]

The present invention relates to a pressure-sensitive device for obtaining information according to the pressure of fluid led from a joint, for example a pressure switch outputting a on-off signal based on change in the pressure of refrigerant fluid in refrigerant cycle or a pressure sensor detecting the pressure of fluid and outputting a pressure signal, and a joint welding method of the pressure-sensitive device.

### [Background Art]

As a conventional pressure-sensitive device, for example, there is a pressure switch disclosed in Patent Document 1. The pressure switch has a joint connected to a pipe in which fluid of a detection object flows and a pressure vessel. The pressure vessel consists of a cap member (main body case) and a diaphragm. The fluid is led into the cap member of the pressure vessel through the joint, and the pressure of the pressure vessel is detected by a switch portion when the pressure thereof reaches a set pressure.

The joint is made of copper, and is a copper pipe. The cap member is not especially described in the Patent Document 1, however, in general, the cap member is made of stainless steel. Furthermore, the joint and the cap member are jointed by brazing. In this manner, since it is difficult to weld copper and stainless, the joint and the cap member are jointed by brazing. Furthermore, in order to fix copper and stainless, technique arranging a nickel plate between the copper and the stainless is disclosed in the Patent Document 2. A contact portion between the copper and the nickel, and a contact portion between the nickel and the stainless are welded.

### [Citation List]

### [Patent Literature]

[PTL 1] Patent Document 1: Japanese Patent Publication Application No. 2004-12140
[PTL 2] Patent Document 2: Japanese Patent Publication Application No. 2006-32072

### [Summary of Invention]

### [Technical Problem]

In a manufacturing process of the pressure switch of the Patent Document 1, a method for brazing the joint and the cap member is performed by burner brazing and furnace brazing. For this reason, pickling is required so as to clean off flux and burning. The pickling has an unfavorable effect on environment, and causes pollution.

In the welding technique of the Patent Document 2, a projection is formed in a welding member, and the projection is pressed and electrically welded. For this reason, when only two members are fixed, it is possible to apply the above welding technique to welding between copper and stainless. However, when high sealing property is required against high pressure such as welding between the cap member of the pressure switch and the joint, it is difficult to apply the above technique.

Accordingly, an object of the present invention is to provide a pressure-sensitive device such as a pressure switch which can securely connect a joint made of copper to a cap member made of stainless with high sealing property, the pressure-sensitive device detecting the pressure of fluid led into a pressure vessel having the cap member from the joint.

### [Solution to Problem]

In order to attain the above-mentioned object, a pressure-sensitive device according to a first aspect of the present invention comprises: a copper joint connected to a pipe in which fluid to be detected about its pressure flows; a stainless-steel cap member arranged in a pressure vessel in which the fluid is led, and having a connection hole, in which an end portion of the joint is inserted, in the center of the cap member; a flange portion formed in an outer circumference of the joint; and a flat portion arranged around the connection hole of the cap member opposite to the flange portion of the joint, and jointed to the flange portion thereof, wherein a melt-solidified layer made of copper, nickel and iron is formed in all over gap between the flat portion of the cap member and the flange portion of the joint by welding, and the cap member and the joint are jointed with the melt-solidified.

According to a second aspect of the pressure-sensitive device of the present invention, the melt-solidified layer is formed between the flat portion of the cap member and the flange portion of the joint so as to enter from an outer peripheral edge of the flange portion toward an axis of the joint.

According to a third aspect of the pressure-sensitive device of the present invention, a nickel plate is arranged between the flat portion of the cap member and the flange portion of the joint, and the melt-solidified layer is formed so as to enter from an inner side of the cap member to the flange portion through the flat portion and the nickel plate.

According to a fourth aspect of the pressure-sensitive device of the present invention, the flange portion of the joint abuts on the flat portion of the cap member, and a nickel plate is arranged opposite to the flat portion of the cap member, and the melt-solidified layer is formed so as to enter from the nickel plate to the flat portion of the cap member through the flange portion.

A method for welding a joint of pressure-sensitive device to a cap member according to a fifth aspect of the present invention, the pressure-sensitive device having a copper joint connected to a pipe in which fluid of pressure-detecting object flows; a stainless-steel cap member arranged in a pressure vessel in which the fluid is introduced, and having a connection hole in which an end portion of the joint is inserted in the center; a flange portion formed in an outer circumference of the joint; and a flat portion arranged around the connection hole of the cap member opposite to the flange portion of the joint, and jointed to the flange portion thereof, the method comprising the steps of:
arranging a washer-shaped nickel plate between the flat portion of the cap member and the flange portion of the joint;
irradiating a laser beam having a beam diameter being equal to or larger than a thickness of the nickel plate toward an entire circumference of an outer peripheral edge of the nickel plate around an axis of the joint;
melting the nickel plate, a part of the flat portion and a part of the flange portion;
forming a melt-solidified layer made of melted copper, nickel and iron between the flat portion and the flange portion; and
jointing the cap member to the joint with the melt-solidified layer.

A method for welding a joint of pressure-sensitive device to a cap member according to a sixth aspect of the present invention, the pressure-sensitive device having a copper joint connected to a pipe in which fluid of pressure-detecting object flows; a stainless-steel cap member arranged in a pressure vessel in which the fluid is introduced, and having a connection hole in which an end portion of the joint is inserted in the center; a flange portion formed in an outer circumference of the joint; and a flat portion arranged around the connection hole of the cap member opposite to the flange portion of the joint, and jointed to the flange portion thereof, the method comprising the steps of:
arranging a washer-shaped nickel plate between the flat portion of the cap member and the flange portion of the joint;
irradiating a laser beam from an inner side of the cap member to an entire circumference of the flat portion centering around an axis of the joint;
melting the flat portion, the nickel plate and the flange portion;
forming a melt-solidified layer made of melted copper, nickel and iron and entering from an inner side of the flat portion to the flange portion through the nickel plate; and
jointing the cap member and the joint with the melt-solidified layer.

A method for welding a joint of pressure-sensitive device to a cap member according to a seventh aspect of the present invention, the pressure-sensitive device having a copper joint connected to a pipe in which fluid of pressure-detecting object flows; a stainless-steel cap member arranged in a pressure vessel in which the fluid is introduced, and having a connection hole in which an end portion of the joint is inserted in the center; a flange portion formed in an outer circumference of the joint; and a flat portion arranged around the connection hole of the cap member opposite to the flange portion of the joint, and jointed to the flange portion thereof, the method comprising the steps of:
arranging the flange portion of the joint next to the flat portion of the cap member, and a nickel plate opposite to the flat portion of the cap member;
irradiating a laser beam from an opposite side of the nickel plate not abutting on the flange portion to an entire circumference of the nickel plate centering around an axis of the joint;
melting the nickel plate, the flange portion and the flat portion;
forming a melt-solidified layer made of melted copper, nickel and iron and entering from the nickel plate to the flat portion through the flange portion; and
jointing the cap member and the joint with the melt-solidified layer.

### [Advantageous Effects of Invention]

According to the pressure-sensitive device of the present invention, the melt-solidified layer is made of copper, nickel and iron. Therefore, the melt-solidified layer is securely jointed to the flat portion of the cap member made of stainless steel in the entire circumference, and the melt-solidified layer is securely jointed to the flange portion of the joint made of copper in the entire circumference. Thereby, the joint made of copper and the cap member made of stainless steel can be securely connected with high airtightness. Moreover, in the manufacturing process, a brazing process and a pickling process are not required.

According to the pressure-sensitive device of the present invention, in addition to the above effect, the melt solidified layer is entered from the outer peripheral edge of the flange toward the axis of the joint between the flat portion around the connection hole of the cap member and the flange portion of the joint. Thus, the jointed area connecting the melt-solidified layer, the cap member and the flange portion is wide, and as a result high sealing performance are obtained.

Furthermore, according to the pressure-sensitive device of the present invention, the melt-solidified layer passes through the nickel plate from the inner side of the flat portion of the cap member, and is entered into the flange portion of the joint. As a result, the melt-solidified layer is formed in a cylindrical shape so that both the jointed surface between the flat portion of the cap member and the nickel plate and the jointed surface between the flange portion and the nickel plate are covered in a direction of the axis of the joint. Thus, both the jointed surfaces are connected with high airtight performance, and high sealing performance is further obtained.

### [Brief Description of Drawings]

[Fig. 1]

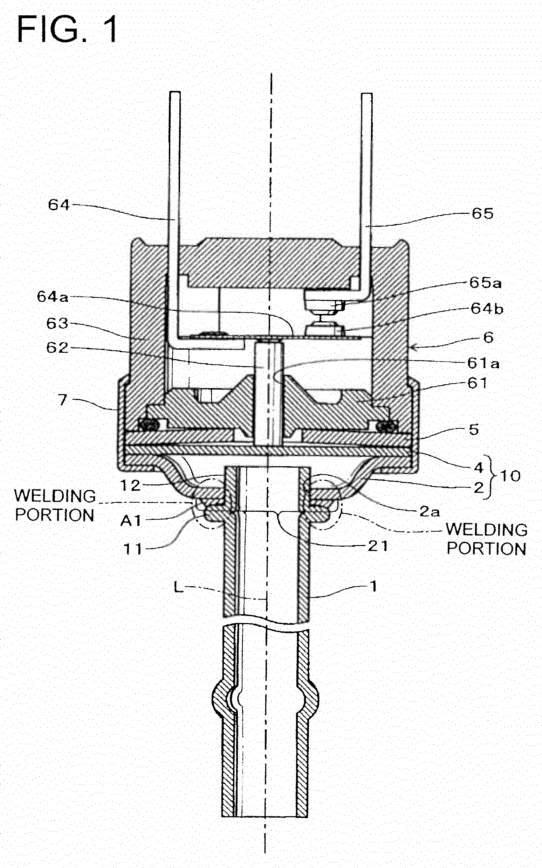

   FIG. 1 is a longitudinal sectional view of a pressure switch in an example 1 as a pressure-sensitive device according to an embodiment in a present invention.
[Fig. 2]

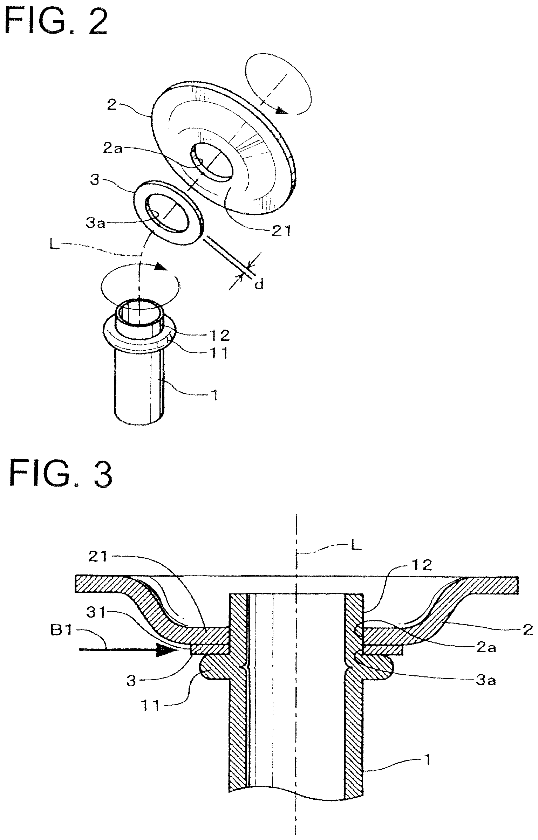

   FIG. 2 is a main part perspective view of the pressure switch in the example 1 before welding.
[Fig. 3]
   FIG. 3 is a main part longitudinal sectional view of the pressure switch in the example 1 before welding, and an illustration diagram of a welding method.
[Fig. 4]

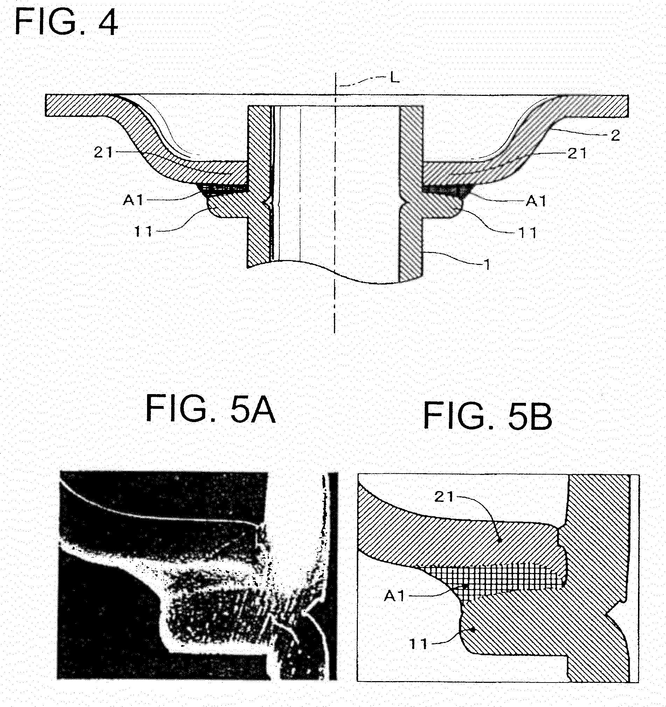

   FIG. 4 is a main part longitudinal sectional view of the pressure switch in the example 1 after welding
[Fig. 5A]
   FIG. 5A is a photograph of a welding portion of the pressure switch in the example 1.
[Fig. 5B]
   FIG. 5B is a view showing a frame format of the photograph of FIG. 5A.
[Fig. 6]

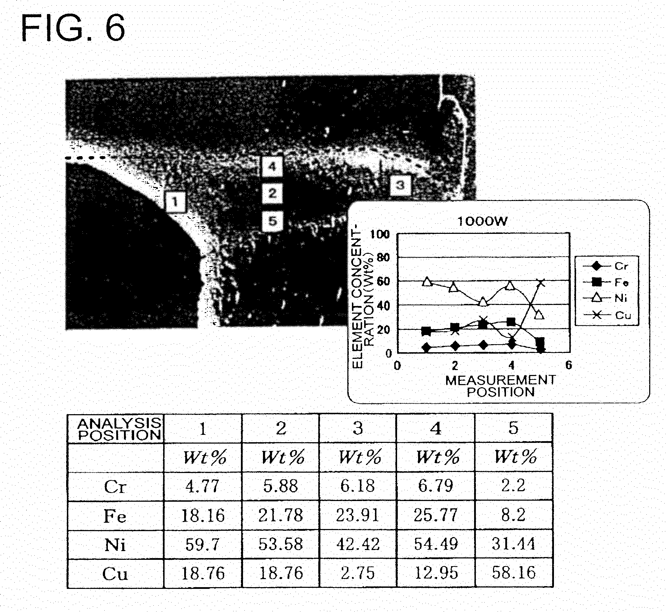

   FIG. 6 is a view showing result of componential analysis of a melt-solidified layer in the example 1.
[Fig. 7]

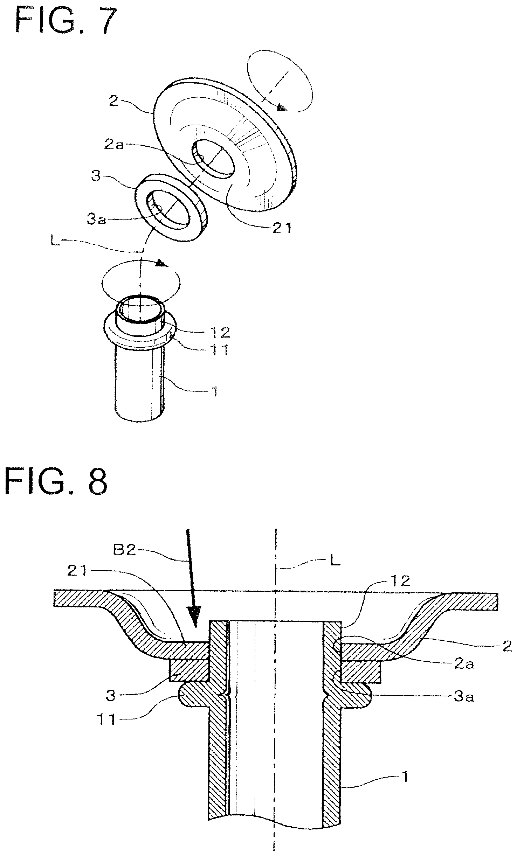

   FIG. 7 is a main part perspective view of the pressure switch in an example 2 before welding.
[Fig. 8]
   FIG. 8 is a main part longitudinal sectional view of the pressure switch in the example 2 before welding, and an illustration diagram of a welding method.
[Fig. 9]

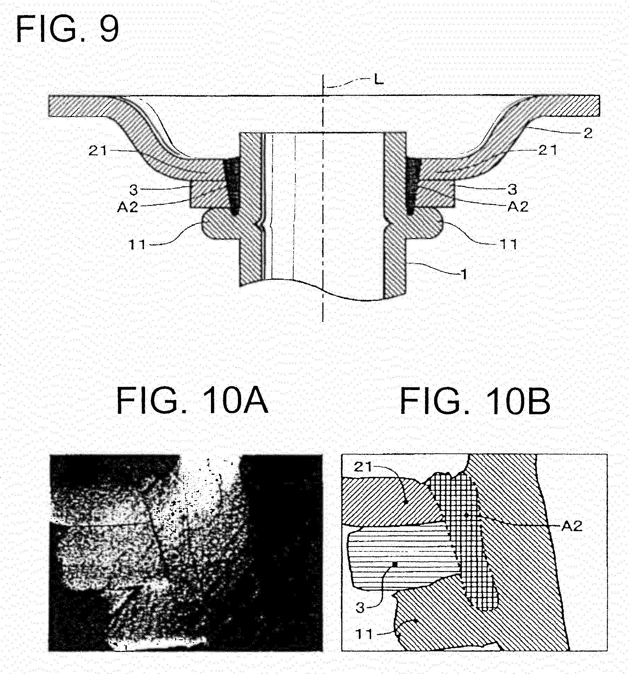

   FIG. 9 is a main part longitudinal sectional view of the pressure switch in the example 2 after welding.
[Fig. 10A]
   FIG. 10A is a photograph of a welding portion of the pressure switch in the example 2.
[Fig. 10B]
   FIG. 10B is a view showing a frame format of the photograph of FIG. 10A.
[Fig. 11]

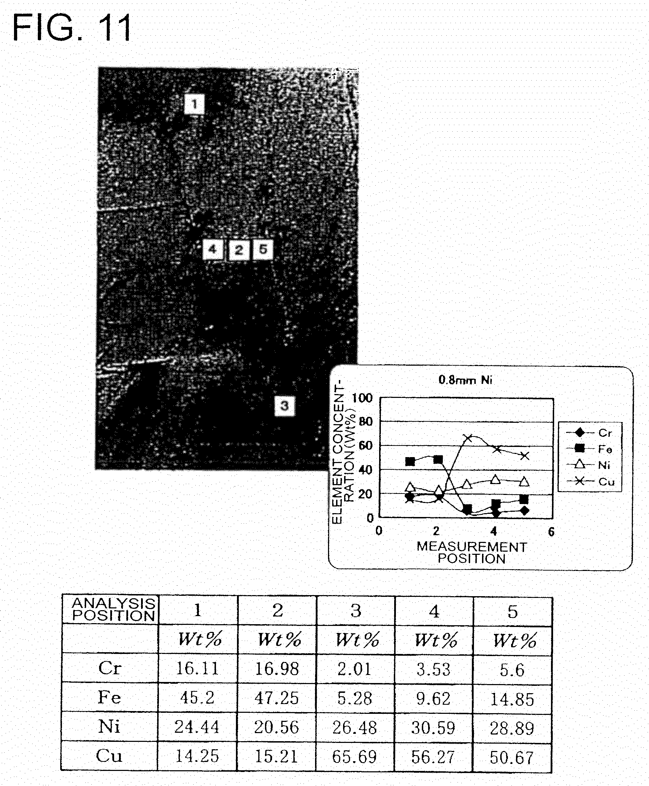

   FIG. 11 is a view showing result of componential analysis of a melt-solidified layer in the example 2.
[Fig. 12]

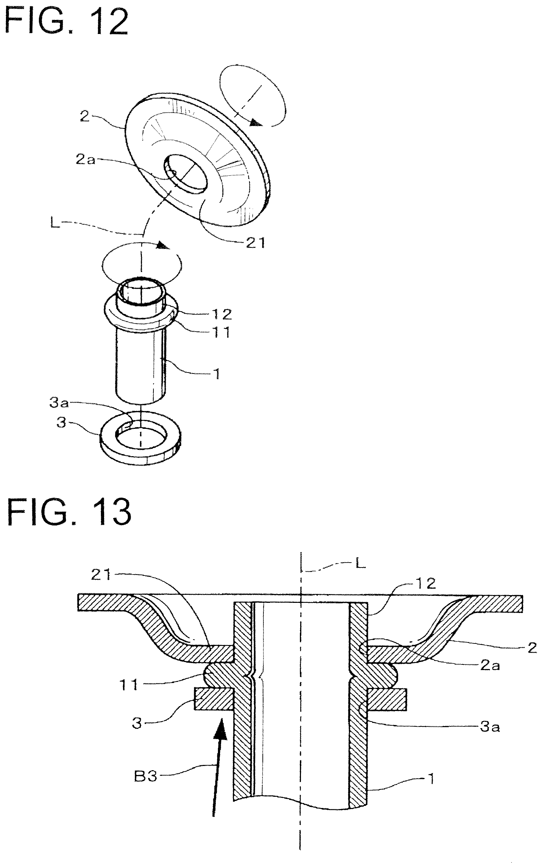

   FIG. 12 is a main part perspective view of the pressure switch in an example 3 before welding.
[Fig. 13]
   FIG. 13 is a main part longitudinal sectional view of the pressure switch in the example 3 before welding, and an illustration diagram of a welding method.
[Fig. 14]

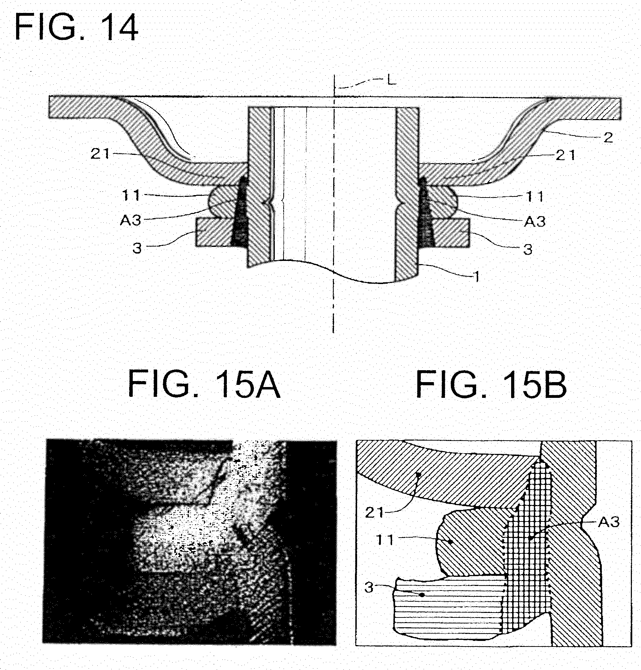

   FIG. 14 is a main part longitudinal sectional view of the pressure switch in the example 3 after welding.
[Fig. 15A]
   FIG. 15A is a photograph of a welding portion of the pressure switch in the example 3.
[Fig. 15B]
   FIG. 15B is a view showing a frame format of the photograph of FIG. 15A.
[Fig. 16]

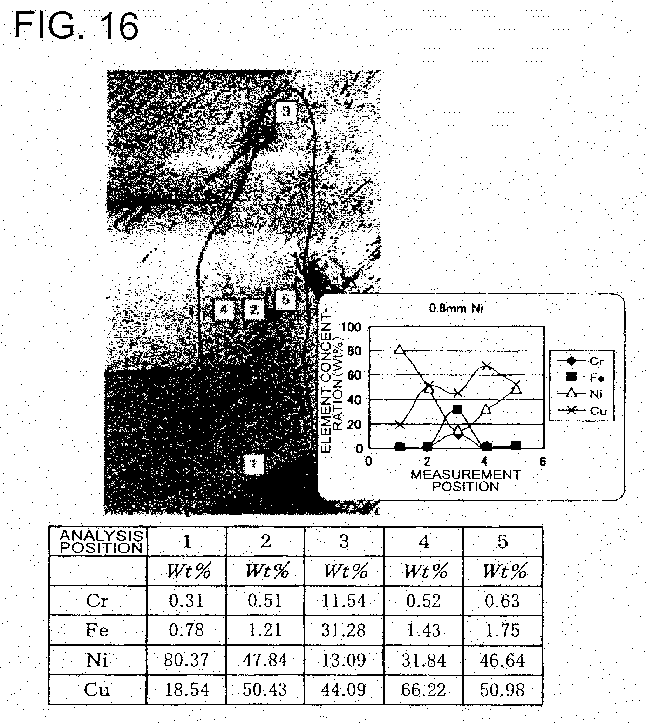

   FIG. 16 is a view showing result of componential analysis of a melt-solidified layer in the example 3.
[Fig. 17]

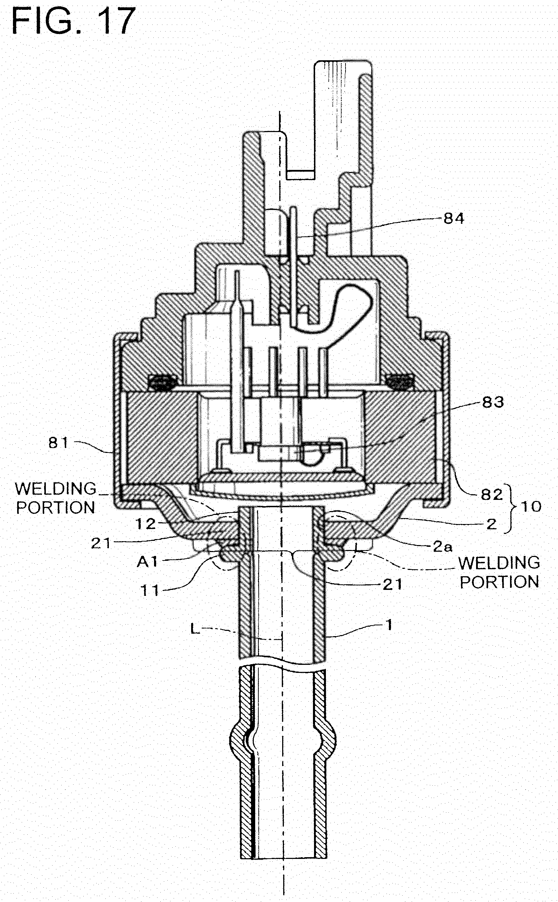

   FIG. 17 is a longitudinal sectional view of a pressure switch according to another embodiment in a present invention.

### [Description of Embodiments]

An embodiment of a pressure-sensitive device and a joint welding method of the pressure-sensitive device in the present invention will be explained with reference to the drawings.

### [Example 1]

FIG. 1 is a longitudinal sectional view of a pressure switch in an example 1 as a pressure-sensitive device according to an embodiment in a present invention. FIG. 2 is a main part perspective view of the pressure switch in the example 1 before welding. FIG. 3 is a main part longitudinal sectional view of the pressure switch in the example 1 before welding, and an illustration diagram of a welding method. FIG. 4 is a main part longitudinal sectional view of the pressure switch in the example 1 after welding. FIG. 5A is a photograph of a welding portion of the pressure switch in the example 1.FIG. 5B is a view showing a frame format of the photograph of FIG. 5A.

The pressure switch has a copper joint 1 connected to a pipe in which fluid of detection object flows, a stainless-steel cap member 2, a circular disk 4, a stopper 5, a switch portion 6, and a caulking plate 7. The cap member 2 and the circular disk 4 are arranged in a pressure vessel 10, and the stopper 5 is arranged adjacent to the circular disk 4. The stopper 5 controls change in a shape of the circular disk 4 so that the shape is not deformed over a predetermined amount.

The switch portion 6 has a guide 61, a shaft 62, and a circular terminal block 63. In the center of the guide 61, a shaft hole 61a is formed. The shaft 62 is inserted into the shaft hole 61a of the guide 61. The terminal block 63 is fitted around the guide 61. Outer circumferences of the cap member 2, the circular disk 4, and the stopper 5 are fixed to an end portion of the terminal block 63 with the caulking plate 7. In the terminal block 63, a C-terminal 64 and a L-terminal 65 is fixed. A contact plate 64a is attached to the C-terminal 64. A C-contact point 64b is attached to the contact plate 64a, and a L-contact point 65a is attached to the L-terminal 65.

In the above construction, fluid is led into the pressure vessel 10 having the cap member 2 and the circular disk 4 through the joint 1, the circular disk 4 is deformed depending on the pressure of the fluid, and the shaft 62 is pressed. When the pressure becomes a predetermined set pressure, the C contact point 64b comes into contact with the L contact point 65b in conjunction with the shaft 62, and the pressure switch is ON. Thereby, the pressure switch can detect that the pressure of fluid reaches the set pressure.

The joint 1 is a circular copper pipe, and arranged along an axis L. In an outer circumference of the end portion 12 of the joint 1 at the cap member 2 side, a disk-shaped flange portion 11 is formed on the axis L. Furthermore, the flange portion 11 is integrally formed by deforming a main body of the joint 1. In the center of the cap member 2, a circular connection hole 2a is arranged, and formed with a size fitted to the end portion 12 of the joint 1. Furthermore, the cap member 2 has a flat portion 21 opposed to the flange portion 11 around the connection hole 2a. The joint 1 and the cap member 2 are connected with a melt-solidified layer A1 formed between the flange portion 11 and the flat portion 21 by welding.

The structure of a welding portion including the flange portion 11, the melt-solidified layer A1, and the flat portion 21 shown in FIG. 1 of the example 1 differs from an example 2 and an example 3 described below. However, the other structure except the welding portion in the example 1 is the same structure as the examples 2 and 3.

As shown in FIG. 2, in the welding portion, a nickel plate 3 is used. The nickel plate 3 is formed in a washer-shape, and has a through hole 3a in the center thereof. The through hole 3a is fitted to the end portion 12 of the joint 1. Furthermore, as shown in FIG. 3, before welding, the end portion 12 of the joint 1 is fitted to the through hole 3a of the nickel plate 3, and the nickel plate 3 is positioned between the flange portion 11 of the joint 1 and the flat portion 21, and then the end portion 12 of the joint 1 is fitted to the connection hole 2a of the cap member 2. As a result, the nickel plate 3 and the cap member 2 are assembled in the joint 1.

As shown in FIG. 3, in the example 1, a laser beam B1 is irradiated toward an outer peripheral edge 31 of the nickel plate 3 at aright angles to the axis L. For example, assembly components of the joint 1, the cap member 2 and the nickel plate 3 are rotated around the axis L as shown in the arrow of FIG. 2, and welded around all the outer peripheral edge 31 of the nickel plate 3. A beam diameter of the laser beam B1 in the example 1 is equal to or larger than a thickness d of the nickel plate 3. In the example 1, the thickness d is 0.2 mm, and the beam diameter is also 0.2 mm. Preferably, the thickness d is 0.15 mm to 0.2 mm, and the maximum thereof is equal to or smaller than 0.5 mm.

When the welding is performed by the laser beam, a melt hole is formed by laser irradiation from the outer peripheral edge 31 of the nickel plate 3 toward the axis L side. At this time, a part of the flange portion 11 and a part of the flat portion 21 are melted together. Thereafter, the melt flows into the melt hole, and is cooled and solidified after passing the laser beam. As a result, the melt-solidified layer A1 is formed. By the above welding, as shown in FIGS. 4 and 5, the melt-solidified layer A1 is formed in all over gap between the flange portion 11 of the joint 1 and the flat portion 21 of the cap member 2. Furthermore, the melt-solidified layer A1 is formed between the flat portion 21 and the flange portion 11 so that the melt-solidified layer A1 penetrates deep from the outer peripheral edge 31 of the flange portion 11 into the axis L of the joint 1. In addition, the melt-solidified layer A1 is made of copper produced by welding a part of the flange portion 11, nickel produced by welding the nickel plate 3, and iron produced by welding the flat portion 2. By melting and solidifying them, the melt-solidified layer A1 is produced.

FIG. 6 is a view showing result of componential analysis of the melt-solidified layer Al in the example 1. The weight percentage (Wt%) of each component of Cr, Fe, Ni, Cu at analysis positions [1] to [5] shown in FIG. 6 is shown by graph and table in FIG. 6. The amount of Cu is the largest at the analysis position [5] close to the flange portion 11 made of copper, and the amount of Fe and Cr is the most at the analysis position [4] close to the flat portion 21 made of stainless steel. Furthermore, each component of Cr, Fe, Ni and Cu varies in amount depending on at a position of the melt-solidified layer A1, but is respectively distributed. Thus, it is found that the flange portion 11 and the flat portion 21 are securely fixed each other.

### [Example 2]

FIG. 7 is a main part perspective view of the pressure switch in an example 2 before welding. FIG. 8 is a main part longitudinal sectional view of the pressure switch in the example 2 before welding, and an illustration diagram of a welding method. FIG. 9 is a main part longitudinal sectional view of the pressure switch in the example 2 after welding. FIG. 10A is a photograph of a welding portion of the pressure switch in the example 2. FIG. 10B is a view showing a frame format of the photograph of FIG. 10A.

As shown in FIG. 7, in the welding portion, the nickel plate 3 is used. The nickel plate 3 is formed in a washer-shape, and the thickness thereof is a little larger than the thickness of the nickel plate 3 of the example 1. Furthermore, in the center of the nickel plate 3, the through hole 3a fitted to the end portion 12 of the joint 1 is formed. As shown in FIG. 8, before welding, the end portion 12 of the joint 1 is fitted to the through hole 3a of the nickel plate 3, and the nickel plate 3 is positioned between the flange portion 11 of the joint 1 and the flat portion 21, and then the end portion 12 of the joint 1 is fitted to the connection hole 2a of the cap member 2. Thus, the nickel plate 3 and the cap member 2 are assembled in the joint 1.

Furthermore, as shown in FIG. 8, in the example 2, a laser beam B2 is irradiated from an inner side of the flat portion 21 parallel to the axis L. For example, assembly components of the joint 1, the cap member 2 and the nickel plate 3 are rotated around the axis L as shown in the arrow of FIG. 7, and welded along all the inner circumference of the flat portion 21 around the end portion 12 of the joint 1. Also, a beam diameter of the laser beam B2 in the example 2 is 0.2 mm.

When the welding is performed by the leaser beam, a melt hold is formed by laser irradiation from the inner side of the flat portion 21 through the nickel plate 3, and reaches the flange portion 11. The melt flows into the melt hole, and is cooled and solidified after passing the laser beam. As a result, the meld-solidified layer A1 is formed. By the above welding, as shown in FIGS. 9 and 10, the melt-solidified layer A2 penetrates through the nickel plate 3 from the flat portion 21 of the cap member 2, reaches the flange portion 11, and is formed around the whole circumference of the end portion 12 of the joint 1. In other words, the melt-solidified layer A2 is formed so that the melt-solidified layer A2 penetrates through the flat portion 21 and the nickel plate 3 from the inner side of the cap member 2 to the flange portion 11. Furthermore, the melt-solidified layer A2 is made of iron produced by welding the flat portion 21, nickel produced by welding the nickel plate 3, and copper produced by welding the flange portion 11. By melting and solidifying them, the melt-solidified layer A2 is provided.

FIG. 11 is a view showing result of componential analysis of the melt-solidified layer A1 in the example 2. The weight percentage (Wt%) of each component of Cr, Fe, Ni, Cu at analysis positions [1] to [5] shown in FIG. 11 is shown by graph and table in FIG. 11. The amount of Cu is the largest at the analysis position [3] corresponding to the flange portion 11 made of copper, and the amount of Ni is the largest at the analysis position [4] corresponding to the nickel plate 3. Furthermore, each component of Cr, Fe, Ni and Cu varies in amount depending on at a position of the melt-solidified layer A2, but is respectively distributed. Thus, it is found that the flange portion 11 and the flat portion 21 are securely fixed.

### [Example 3]

FIG. 12 is a main part perspective view of the pressure switch in an example 3 before welding. FIG. 13 is a main part longitudinal sectional view of the pressure switch in the example 3 before welding, and an illustration diagram of a welding method. FIG. 14 is a main part longitudinal sectional view of the pressure switch in the example 3 after welding. FIG. 15A is a photograph of a welding portion of the pressure switch in the example 3. FIG. 15B is a view showing a frame format of the photograph of FIG. 15A. FIG. 16 is a view showing result of componential analysis of a melt-solidified layer in the example 3.

As shown in FIG. 12, the nickel plate 3 is used in the welding portion. The nickel plate 3 is formed in a washer-shape, and thickness thereof is a little larger than the thickness pf the nickel plate 3 of the example 1. In the center thereof, the through hole 3a fitted to the end portion 12 of the joint 1 is formed. As shown in FIG. 13, before welding, the end portion 12 of the joint 1 is fitted to the connection hole 2a of the cap member 2, and the joint 1 is inserted into the through hole 3a of the nickel plate 3 from the bottom side (namely, the opposite side of the flat portion 21) of the flange 11 of the joint 1. Thus, the cap member 2 and the nickel plate 3 are assembled in the joint 1.

As shown in FIG. 13, in the example 3, a laser beam B3 is irradiated parallel to the axis L from a lower side (namely, the opposite side of the flange portion 11) of the nickel plate 3 toward the entire circumference of the nickel plate 3 around the axis L. For example, assembly components of the joint 1, the cap member 2 and the nickel plate 3 are rotated around the axis L as shown in the arrow of FIG. 12, and welded along the entire circumference of the nickel plate 3 around the joint 1. Also, a beam diameter of the laser beam B3 in the example 2 is 0.2 mm.

When the welding is performed by the laser beam, a melt hole is formed by laser irradiation from the nickel plate 3 through the flange portion 11, and reaches the flat portion 21. The melt flows into the melt hole, and is cooled and solidified after passing the laser beam. As a result, the meld-solidified layer A3 is formed. By the above welding, as shown in FIGS. 14 and 15, the melt-solidified layer A3 penetrates through the flange portion 11 from the nickel plate 3, and reaches the flat portion 21. As a result, the melt-solidified layer A3 is formed. That is, the melt-solidified layer A 3 penetrates through the nickel plate 3 and the flange portion 11, and is entered into the flat portion 21. Furthermore, the melt-solidified layer A3 is made of nickel produced by welding the nickel plate 3, copper produced by welding the flange portion 11, and iron produced by welding the flat portion 21. By melting and solidifying the nickel, the copper and the iron, the melt-solidified layer A3 is provided.

FIG. 16 is a view showing result of componential analysis of the melt-solidified layer A3 in the example 3. The weight percentage (Wt%) of each component of Cr, Fe, Ni and Cu at analysis positions shown in FIG. 16 is shown by graph and table in FIG. 16. The amount of Cu is high at the analysis positions [2], [4] and [5] corresponding to the flange portion 11 made of copper. At the analysis position [3], the amount of Fe and Cr is a little high, however Cu penetrates the analysis position [3]. Furthermore, each component of Cr, Fe, Ni and Cu varies in amount depending on at a position of the melt-solidified layer A3, but is respectively distributed. Thus, it is found that the flange portion 11 and the flat portion 21 are securely fixed.

In the above embodiment, examples of the pressure switch as the pressure-sensitive device is explained, but as shown in FIG. 17 the present invention can be applied to a pressure sensor. In FIG. 17, elements and reference numerals as well as FIG. 1 will not be explained. The pressure sensor of the embodiment has a cap member 2 fixed to a case 82 with a caulking plate 81. The cap member 2 and the case 82 are arranged in a pressure vessel 10. Furthermore, the joint 1 is welded by laser-welding as well as the examples 1, 2 and 3. The pressure sensor detects a fluid pressure in the cap member 2 by a sensor element 83, and outputs a sensor signal according to the fluid pressure through a terminal 84 and a lead wire not shown outside. In the pressure sensor of the embodiment, the action of the joint 1, the nickel plate 3 and the cap member 2 by laser welding is the same as the examples 1, 2, and 3.

Also, in each example, the depth of the melt-solidified layers A1, A2 and A3 can be set by liner velocity relative to the welding point and laser beam and output of laser beam.

It is difficult to weld copper and stainless (or iron) in a direct way. However, as each above examples, it is possible to weld them in the manner by melting together nickel for easily making alloy with copper and by reducing contain of iron in the welding portion. Furthermore, pressure resistance against fluid of high-pressure added from the joint 1 can be maintained in the pressure switch or the pressure sensor.

### [Reference Signs List]

1 Joint
2 Cap member
3 Nickel plate
11 Flange portion
21 Flat portion
A1, A2, A3 Melt-solidified layer

## Claims

1. A pressure-sensitive device comprising:
a copper joint (1) connected to a pipe in which fluid to be detected about its pressure flows;
a stainless-steel cap member (2) arranged in a pressure vessel in which the fluid is led, and having a connection hole, in which an end portion of the joint is inserted, in the center of the cap member;
a flange portion (11) formed in an outer circumference of the joint; and
a flat portion (21) arranged around the connection hole of the cap member opposite to the flange portion of the joint, and jointed to the flange portion thereof,
wherein a melt-solidified layer (A1, A2, A3) made of copper, nickel, iron is formed in all over gap between the flat portion of the cap member and the flange portion of the joint by welding, and the cap member and the joint are jointed with the melt-solidified.

2. The pressure-sensitive device as claimed in claim 1, wherein the melt-solidified layer (A1) is formed between the flat portion of the cap member and the flange portion of the joint so as to enter from an outer peripheral edge of the flange portion toward an axis of the joint.

3. The pressure-sensitive device as claimed in claim 1, wherein a nickel plate is arranged between the flat portion of the cap member and the flange portion of the joint, and the melt-solidified layer (A2) is formed so as to enter from an inner side of the cap member to the flange portion through the flat portion and the nickel plate.

4. The pressure-sensitive device as claimed in claim 1, wherein the flange portion of the joint abuts on the flat portion of the cap member, and a nickel plate is arranged opposite to the flat portion of the cap member, and the melt-solidified layer (A3) is formed so as to enter from the nickel plate to the flat portion of the cap member through the flange portion.

5. A method for welding a joint of pressure-sensitive device to a cap member, the pressure-sensitive device having a copper joint (1) connected to a pipe in which fluid of pressure-detecting object flows; a stainless-steel cap member (2) arranged in a pressure vessel in which the fluid is introduced, and having a connection hole in which an end portion of the joint is inserted in the center; a flange portion (11) formed in an outer circumference of the joint; and a flat portion (21) arranged around the connection hole of the cap member opposite to the flange portion of the joint, and jointed to the flange portion thereof, the method comprising the steps of:
arranging a washer-shaped nickel plate (3) between the flat portion of the cap member and the flange portion of the joint;
irradiating a laser beam having a beam diameter being equal to or larger than a thickness of the nickel plate toward an entire circumference of an outer peripheral edge of the nickel plate around an axis of the joint;
melting the nickel plate, a part of the flat portion and a part of the flange portion;
forming a melt-solidified layer (A1) made of melted copper, nickel, iron between the flat portion and the flange portion; and
jointing the cap member to the joint with the melt-solidified layer.

6. A method for welding a joint of pressure-sensitive device to a cap member, the pressure-sensitive device having a copper joint (1) connected to a pipe in which fluid of pressure-detecting object flows; a stainless-steel cap member (2) arranged in a pressure vessel in which the fluid is introduced, and having a connection hole in which an end portion of the joint is inserted in the center; a flange portion (11) formed in an outer circumference of the joint; and a flat portion (21) arranged around the connection hole of the cap member opposite to the flange portion of the joint, and jointed to the flange portion thereof, the method comprising the steps of:
arranging a washer-shaped nickel plate between the flat portion of the cap member and the flange portion of the joint;
irradiating a laser beam from an inner side of the cap member to an entire circumference of the flat portion centering around an axis of the joint;
melting the flat portion, the nickel plate and the flange portion;
forming a melt-solidified layer (A2) made of melted copper, nickel, iron and entering from an inner side of the flat portion to the flange portion through the nickel plate; and
jointing the cap member and the joint with the melt-solidified layer.

7. A method for welding a joint of pressure-sensitive device to a cap member, the pressure-sensitive device having a copper joint (1) connected to a pipe in which fluid of pressure-detecting object flows; a stainless-steel cap member (2) arranged in a pressure vessel in which the fluid is introduced, and having a connection hole in which an end portion of the joint is inserted in the center; a flange portion (11) formed in an outer circumference of the joint; and a flat portion (21) arranged around the connection hole of the cap member opposite to the flange portion of the joint, and jointed to the flange portion thereof, the method comprising the steps of:
arranging the flange portion of the joint next to the flat portion of the cap member, and a nickel plate opposite to the flat portion of the cap member;
irradiating a laser beam from an opposite side of the nickel plate not abutting on the flange portion to an entire circumference of the nickel plate centering around an axis of the joint;
melting the nickel plate, the flange portion and the flat portion;
forming a melt-solidified layer (A3) made of melted copper, nickel, iron and entering from the nickel plate to the flat portion through the flange portion; and jointing the cap member and the joint with the melt-solidified layer.

## Patentansprüche

1. Druckempfindliche Vorrichtung, umfassend:
ein Kupferanschlussstück (1), verbunden mit einem Rohr, in dem Fluid, dessen Druck zu detektieren ist, fließt;
ein Kappenelement aus rostfreiem Stahl (2), angeordnet in einem Druckbehälter, in dem das Fluid geführt wird, und besitzend ein Verbindungsloch, in dem ein Endabschnitt des Anschlussstücks eingesetzt ist, in der Mitte des Kappenelements;
einen Flanschabschnitt (11), gebildet in einem äußeren Umfang des Anschlussstücks, und
einen flachen Abschnitt (21), angeordnet um das Verbindungsloch des Kappenelements gegenüber dem Flanschabschnitt des Anschlussstücks, und verbunden mit dem Flanschabschnitt davon,
wobei eine schmelzverfestigte Schicht (A1, A2, A3), gemacht aus Kupfer, Nickel, Eisen, über den gesamten Spalt hinweg zwischen dem flachen Abschnitt des Kappenelements und dem Flanschabschnitt des Anschlussstücks durch Schweißen gebildet ist, und wobei das Kappenelement und das Anschlussstück mit der verfestigten Schmelze verbunden sind.

2. Die druckempfindliche Vorrichtung wie in Anspruch 1 beansprucht, wobei die schmelzverfestigte Schicht (A1) zwischen dem flachen Abschnitt des Kappenelements und dem Flanschabschnitt des Anschlussstücks gebildet ist, so dass sie von einer äußeren Umfangskante des Flanschabschnitts in Richtung einer Achse des Anschlussstücks eintritt.

3. Die druckempfindliche Vorrichtung wie in Anspruch 1 beansprucht, wobei eine Nickelplatte zwischen dem flachen Abschnitt des Kappenelements und dem Flanschabschnitt des Anschlussstücks angeordnet ist, und wobei die schmelzverfestigte Schicht (A2) gebildet ist, so dass sie von einer inneren Seite des Kappenelements in den Flanschabschnitt durch den Flanschabschnitt und die Nickelplatte eintritt.

4. Die druckempfindliche Vorrichtung wie in Anspruch 1 beansprucht, wobei der Flanschabschnitt des Anschlussstücks am flachen Abschnitt des Kappenelements anliegt, und wobei eine Nickelplatte gegenüber dem flachen Abschnitt des Kappenelements angeordnet ist, und wobei die schmelzverfestigte Schicht (A3) gebildet ist, so dass sie von der Nickelplatte in den flachen Abschnitt des Kappenelements durch den Flanschabschnitt eintritt.

5. Verfahren zum Verschweißen eines Anschlussstücks einer druckempfindlichen Vorrichtung an ein Kappenelement, wobei die druckempfindliche Vorrichtung besitzt: ein Kupferanschlussstück (1), das mit einem Rohr verbunden ist, in dem ein Fluid eines Objekts, dessen Druck zu detektieren ist, fließt; ein Kappenelement (2) aus rostfreiem Stahl, angeordnet in einem Druckbehälter, in dem das Fluid eingegeben wird, und besitzend ein Verbindungsloch, in dem ein Endabschnitt des Anschlussstücks in die Mitte eingeführt wird; einen Flanschabschnitt (11), gebildet in einem äußeren Umfang des Anschlussstücks; und einen flachen Abschnitt (21), angeordnet um das Verbindungsloch des Kappenelements gegenüber dem Flanschabschnitt des Anschlussstücks, und verbunden mit dem Flanschabschnitt davon, wobei das Verfahren die Schritte umfasst:
Anordnen einer scheibenförmigen (washer-shaped) Nickelplatte (3) zwischen dem flachen Abschnitt des Kappenelements und dem Flanschabschnitt des Anschlussstücks;
Einstrahlen eines Laserstrahls, besitzend einen Strahldurchmesser, der gleich oder größer ist als eine Dicke der Nickelplatte, in Richtung eines gesamten Umfangs einer äußeren Umfangkante der Nickelplatte um eine Achse des Anschlussstücks herum;
Schmelzen der Nickelplatte, eines Teils des flachen Abschnitts und eines Teils des Flanschabschnitts;
Bilden einer schmelzverfestigten Schicht (A1), gebildet aus geschmolzenem Kupfer, Nickel, Eisen, zwischen dem flachen Abschnitt und dem Flanschabschnitt; und
Verbinden des Kappenelements mit dem Anschlussstück mit der schmelzverfestigten Schicht.

6. Verfahren zum Verschweißen eines Anschlussstücks einer druckempfindlichen Vorrichtung mit einem Kappenelement, wobei die druckempfindliche Vorrichtung besitzt: ein Kupferanschlussstück (1), das mit einem Rohr verbunden ist, in dem ein Fluid eines Objekts, dessen Druck zu detektieren ist, fließt; ein Kappenelement (2) aus rostfreiem Stahl, angeordnet in einem Druckbehälter, in dem das Fluid eingegeben wird, und besitzend ein Verbindungsloch, in dem ein Endabschnitt des Anschlussstücks in die Mitte eingeführt wird; einen Flanschabschnitt (11), gebildet in einem äußeren Umfang des Anschlussstücks; und einen flachen Abschnitt (21), angeordnet um das Verbindungsloch des Kappenelements gegenüber dem Flanschabschnitt des Anschlussstücks, und verbunden mit dem Flanschabschnitt davon, wobei das Verfahren die Schritte umfasst:
Anordnen einer scheibenförmigen (washer-shaped) Nickelplatte zwischen dem flachen Abschnitt des Kappenelements und dem Flanschabschnitt des Anschlussstücks;
Einstrahlen eines Laserstrahls von einer inneren Seite des Kappenelements auf einen gesamten Umfang des flachen Abschnitts, der um eine Achse des Anschlussstücks herum zentriert ist;
Schmelzen des flachen Abschnitts, der Nickelplatte und des Flanschabschnitts;
Bilden einer schmelzverfestigten Schicht (A2), gebildet aus geschmolzenem Kupfer, Nickel Eisen, und eintretend von einer inneren Seite des flachen Abschnitts zum Flanschabschnitt durch die Nickelplatte; und
Verbinden des Kappenelements und des Anschlussstücks mit der schmelzverfestigten Schicht.

7. Verfahren zum Verschweißen eines Anschlussstücks einer druckempfindlichen Vorrichtung mit einem Kappenelement, wobei die druckempfindliche Vorrichtung besitzt: ein Kupferanschlussstück (1), das mit einem Rohr verbunden ist, in dem ein Fluid eines Objekts, dessen Druck zu detektieren ist, fließt; ein Kappenelement (2) aus rostfreiem Stahl, angeordnet in einem Druckbehälter, in dem das Fluid eingegeben wird, und besitzend ein Verbindungsloch, in dem ein Endabschnitt des Anschlussstücks in die Mitte eingeführt wird; einen Flanschabschnitt (11), gebildet in einem äußeren Umfang des Anschlussstücks; und einen flachen Abschnitt (21), angeordnet um das Verbindungsloch des Kappenelements gegenüber dem Flanschabschnitt des Anschlussstücks, und verbunden mit dem Flanschabschnitt davon, wobei das Verfahren die Schritte umfasst:
Anordnen des Flanschabschnitts des Anschlussstücks neben dem flachen Abschnitt des Kappenelements und einer Nickelplatte gegenüber dem flachen Abschnitt des Kappenelements;
Einstrahlen eines Laserstrahls von einer gegenüberliegenden Seite der Nickelplatte, die nicht am Flanschabschnitt anliegt, auf einen gesamten Umfang der Nickelplatte, die um eine Achse des Anschlussstücks herum zentriert ist;
Schmelzen der Nickelplatte, des Flanschabschnitts und des flachen Abschnitts;
Bilden einer schmelzverfestigten Schicht (A3), gebildet aus geschmolzenem Kupfer, Nickel, Eisen, und eintretend von der Nickelplatte zum flachen Abschnitt durch den Flanschabschnitt; und
Verbinden des Kappenelements und des Anschlussstücks mit der schmelzverfestigten Schicht.

## Revendications

1. Dispositif sensible à la pression comprenant:
une jonction en cuivre (1) reliée à une conduite dans laquelle circule un fluide à détecter en termes de pression;
un élément de couvercle en acier inoxydable (2) agencé dans un récipient sous pression dans lequel le fluide est conduit, et présentant un trou de raccordement, dans lequel une partie d'extrémité du joint est introduite, au centre de l'élément de couvercle;
une partie bride (11) formée dans une circonférence extérieure du joint; et
une partie plate (21) agencée autour du trou de raccordement de l'élément de couvercle opposé à la partie bride du joint, et jointe à la partie bride de celui-ci,
dans lequel une couche solidifiée à l'état fondu (A1, A2, A3) en cuivre, nickel, fer est formée dans tout l'interstice entre la partie plate de l'élément de couvercle et la partie bride du joint par soudage, et l'élément de couvercle et le joint sont joints avec la couche solidifiée à l'état fondu.

2. Dispositif sensible à la pression selon la revendication 1, dans lequel la couche solidifiée à l'état fondu (A1) est formée entre la partie plate de l'élément de couvercle et la partie bride du joint de manière à entrer à partir d'un bord périphérique externe de la partie bride vers un axe du joint.

3. Dispositif sensible à la pression selon la revendication 1, dans lequel une plaque de nickel est disposée entre la partie plate de l'élément de couvercle et la partie bride de joint, et la couche solidifiée à l'état fondu (A2) est formée de manière à entrer à partir d'un côté intérieur de l'élément de couvercle dans la partie bride à travers la partie plate et la plaque de nickel.

4. Dispositif sensible à la pression selon la revendication 1, dans lequel la partie bride du joint aboute contre la partie plate de l'élément de couvercle, dans lequel une plaque de nickel est disposée entre la partie plate de l'élément de couvercle et la partie bride de joint, et la couche solidifiée à l'état fondu (A3) est formée de manière à entrer à partir de la plaque de nickel dans la partie plate de l'élément de couvercle à partir de la partie bride.

5. Procédé de soudage d'un joint de dispositif sensible à la pression sur un élément de couvercle, le dispositif sensible à la pression possédant un joint de cuivre (1) relié à un tuyau dans lequel s'écoule le fluide de l'objet détecteur de pression; un élément de couvercle (2) en acier inoxydable disposé dans un récipient sous pression dans lequel le fluide est introduit, et présentant un trou de raccordement dans le centre duquel est introduite une partie d'extrémité du joint; une partie bride (11) formée dans une circonférence extérieure du joint; et une partie plate (21) agencée autour du trou de raccordement de l'élément de couvercle opposé à la partie de bride du joint, et jointe à la partie de bride de celui-ci, le procédé comprenant les étapes consistant à:
disposer une plaque de nickel (3) en forme de rondelle entre la partie plate de l'élément de couvercle et la partie bride du joint;
irradier un faisceau laser présentant un diamètre de faisceau égal ou supérieur à une épaisseur de la plaque de nickel vers une circonférence entière d'un bord périphérique extérieur de la plaque de nickel autour d'un axe du joint;
faire fondre la plaque de nickel, une portion de la partie plate et une portion de la partie bride;
former une couche (A1) solidifiée à l'état fondu à partir de cuivre fondu, de nickel fondu, de fer fondu entre la partie plate et la partie bride; et
assembler l'élément de couvercle au joint avec la couche solidifiée à l'état fondu.

6. Procédé de soudage d'un joint de dispositif sensible à la pression sur un élément de couvercle, le dispositif sensible à la pression possédant un joint de cuivre (1) relié à un tuyau dans lequel s'écoule le fluide de l'objet détecteur de pression; un élément de couvercle (2) en acier inoxydable disposé dans un récipient sous pression dans lequel le fluide est introduit, et présentant un trou de raccordement dans le centre duquel est introduite une partie d'extrémité du joint; une partie bride (11) formée dans une circonférence extérieure du joint; et une partie plate (21) agencée autour du trou de raccordement de l'élément de couvercle opposé à la partie de bride du joint, et jointe à la partie de bride de celui-ci, le procédé comprenant les étapes consistant à:
disposer une plaque de nickel (3) en forme de rondelle entre la partie plate de l'élément de couvercle et la partie bride du joint;
irradier un faisceau laser depuis un côté interne de l'élément de couvercle jusqu'à une circonférence entière de la partie plate se centrant autour d'un axe du joint;
faire fondre la partie plate, la plaque de nickel et la partie bride;
former une couche (A2) fondue à l'état fondu constituée de cuivre fondu, de nickel fondu, de fer fondu et pénétrant d'un côté interne de la partie plate dans la partie bride à travers la plaque de nickel; et
assembler l'élément de couvercle au joint avec la couche solidifiée à l'état fondu.

7. Procédé de soudage d'un joint de dispositif sensible à la pression sur un élément de couvercle, le dispositif sensible à la pression possédant un joint de cuivre (1) relié à un tuyau dans lequel s'écoule le fluide de l'objet détecteur de pression; un élément de couvercle (2) en acier inoxydable disposé dans un récipient sous pression dans lequel le fluide est introduit, et présentant un trou de raccordement dans le centre duquel est introduite une partie d'extrémité du joint; une partie bride (11) formée dans une circonférence extérieure du joint; et une partie plate (21) agencée autour du trou de raccordement de l'élément de couvercle opposé à la partie bride du joint, et jointe à la partie bride de celui-ci, le procédé comprenant les étapes consistant à:
agencer la partie bride du joint à côté de la partie plate de l'élément de couvercle, et une plaque de nickel opposée à la partie plate de l'élément de couvercle;
irradier un faisceau laser depuis un côté opposé de la plaque de nickel ne venant pas en butée sur la partie bride sur toute une circonférence de la plaque de nickel centrée autour d'un axe du joint;
faire fondre la partie plate, la plaque de nickel et la partie bride;
former une couche (A3) fondue à l'état fondu constituée de cuivre fondu, de nickel fondu, de fer fondu et pénétrant d'un côté interne de la partie plate dans la partie bride à travers la plaque de nickel; et
assembler l'élément de couvercle au joint avec la couche solidifiée à l'état fondu.
